# EUROPEAN PATENT APPLICATION

(11) **EP 4 722 673 A1**
(43) Date of publication of application: **08.04.2026**
(21) Application number: 24315457.2
(22) Date of filing: 04.10.2024
(51) Int. Cl.: G01L 5/16, G01L 1/22, G01L 5/22

(54) **FORCE/TORQUE SENSOR DEVICE FOR A FORCE/TORQUE SENSOR MEANS AS WELL AS FORCE/TORQUE SENSOR MEANS**

(71) Applicant: TE Connectivity Sensors France, 31027 Toulouse Cedex 3 (FR)
(72) Inventor: Faye, Papa Aldemba, 31027 Toulouse (FR); Vignolles, Arthur, 31027 Toulouse (FR); Benalla, Fatima Azzahrae, 31027 Toulouse (FR)
(74) Representative: Patentanwaltskanzlei WILHELM & BECK

(57) **Abstract**

The invention relates to a force/torque sensor device (10) for a force/torque sensor means (1) for a robotic entity (0), in particular a robot arm (0) or a robot joint (0), comprising two coaxially arranged flanges (100, 200) connected to each other via a plurality of mechanical transmission structures (14) of the sensor device (10), wherein in each transmission structure (14) a single deformable radial-beam (210) firmly connects the inner flange (100) to the outer flange (300). The radial-beam (210) of each transmission structure (14) is firmly connected to a decoupling-beam (110) of the inner flange (100), wherein a radially (Rd) outer circumferential (Cd) portion of the inner flange (100) constitutes this inner decoupling-beam (110) in the inner flange (100).

## Description

The invention relates to a force/torque sensor device for a force/torque sensor means for a robotic entity, in particular a robot arm or a robot joint. In addition, the invention relates to a force/torque sensor means for a robotic entity, in particular a robot arm or a robot joint. Moreover, the invention relates to a robotic entity for an industrial, a medical, a scientific, or another application.

In particular, robotics is a growing and increasingly important field in industrial, medical, scientific, and other applications. In many cases where a robot arm or a tool attached to a robot arm has to handle a component or to process a workpiece, for example, a force and/or torque occurring on/in the robot arm must be monitored. Therefore, a force and/or torque sensor means, hereinafter referred to as (force/torque) sensor means, is an important component of many axis joints, axis drives, robot joints, robot arms, robots and/or robotic systems.

A force/torque sensor means can use strain-gages to measure deformations of deformable beams of a force and/or torque sensor device, hereinafter referred to as (force/torque) sensor device, of the sensor means, wherein the force/torque sensor device connects two portions e. g. of a robot arm, which can be swivelled, twisted or rotated relative to each other. - For example such a sensor means comprising such a sensor device is known from US 2017/0205296 A1 (US 10 422 707 B2).

Efforts are continually being made to improve robots, and since the demand for robots, such as cobots (collaborative robots), is constantly increasing, the demand for components for them, such as the above-mentioned sensor means, is naturally also increasing. - It is therefore an object of the invention to specify an improved sensor means. The sensor means should work reliably and, if possible, be able to be manufactured at low cost. For high and very high quantities, the sensor means should be suitable for mass production if possible.

The object of the invention is achieved by means of a force/ torque sensor device (absent measurement transducers) for a force/torque sensor means for a robotic entity, in particular a robot arm or a robot joint; by means of a force/torque sensor means (measurement transducers present) for a robotic entity, in particular a robot arm or a robot joint; and by means of a robotic entity for an industrial, a medical, a scientific, or another application; in accordance with the independent claims. - Advantageous developments, additional features and/or advantages of the invention can be gleaned from the dependent claims and the following description.

The inventive sensor device comprises two coaxially arranged flanges connected to each other via a plurality of mechanical transmission structures of the sensor device, wherein in each transmission structure a single deformable radial-beam firmly connects the inner flange to the outer flange. The radial-beam of each transmission structure is firmly connected to a decoupling-beam of the inner flange, wherein a radially outer circumferential portion of the inner flange constitutes this inner decoupling-beam in the inner flange. - I. e. an inner decoupling-beam constitutes an integral circumferential portion in the inner flange. And the radial-beams are the only mechanical connections between the inner flange and the outer flange.

The sensor device may be manufactured cost-effectively and is suitable for measuring forces and torques (moments) in six directions, i. e. along and around three perpendicular axes (twelve different load cases). The inner flange may for example be constituted as a mounting adapter plate. A different design of the inner flange, also as a tool adapter plate, is of course possible. And the outer flange may for example be constituted as a tool adapter plate. A different design of the outer flange, also as a mounting adapter plate, is of course possible.

The inner flange may be hub-shaped at least apart from its inner decoupling beams. Further, the inner flange may comprise single closed cross-sections in the areas of its inner decoupling-beams. Moreover, the inner flange may be completely closed in the circumferential direction around its inner decoupling-beams. The inner decoupling-beams may be constituted by elongated holes that preferably pass completely through the inner flange. Furthermore, the elongated holes may be arranged in a radially outer circumferential portion of the inner flange.

The radial-beam of each transmission structure is firmly connected to a decoupling-beam of the outer flange, wherein an outer circumferential portion of the sensor device may constitute this outer decoupling-beam in the outer flange. I. e. the outer decoupling-beams constitute complete circumferential portions of the outer flange, wherein the decoupling-beams constitute integral circumferential portions in the outer flange.

Apart from mounting devices the outer flange may comprise a single closed cross-section in the area of its decoupling-beams. Further, the outer flange may comprise single closed cross-sections along its entire circumference. Moreover, the outer flange may be completely closed in the circumferential direction of the sensor device. - The outer flange can be essentially or mainly ring-shaped. In particular, the outer flange, apart from its mounting devices, has the shape of a very low straight hollow cylinder (also the inner flange), the base area of which can in principle be arbitrary, but which essentially or mainly has the shape of a regular polygon up to a circle, i. e. also mixed shapes between a regular polygon and a circle are possible.

A relevant decoupling-beam of a transmission structure is defined in such a way that it has a smaller cross-sectional area than the section of the sensor device which directly and preferably integrally (see below) adjoins it in the circumferential direction. I. e. for the e. g. generally or mainly annular outer flange, the outer decoupling-beam is set up in the outer flange by means of a cross-sectional reduction of the outer flange. And for the inner decoupling-beam, this means that it is exposed from the hub-like inner flange, e. g. by the elongated hole (see also below).

Dual decoupling-beams (inner and outer decoupling-beams) or, an inner decoupling-beam alone allows to control and/or to decrease the strain level at the positions of the measurement transducers, in particular the strain-gages. This allows to design a sensor device with a higher torque range for a defined force. The strain-gages may be semiconductor piezoresistive or conventional foil strain-gages. In particular, semiconductor piezoresistive strain-gages of can be made very small, so that small sensor devices are available. Also cf. below.

In each transmission structure the outer decoupling-beam may have a straight or planar shape on the side on which it is connected to the radial-beam. Further, the outer decoupling-beam may have a straight or planar shape on the side radially opposite to the radial-beam. This side is therefore the radial outer side of the sensor device. - In each transmission structure the inner decoupling-beam may have a straight or planar shape on the side on which it is connected to the radial-beam. Further, the inner decoupling-beam may have a straight or planar shape on the side radially opposite to the radial-beam. This side is therefore an inner side of the elongated hole in the inner flange.

In each transmission structure in relation to bending and/or torsion, the deformable radial-beam is stiffer in radial direction than its inner decoupling-beam or its decoupling-beams in a direction perpendicular to the radial direction of the radial-beam. The direction of the decoupling-beam, which is perpendicular to the radial direction of the radial-beam, runs approximately in the circumferential direction or in circumferential direction. In the radial direction, the radial-beams are subjected to tension/compression and the inner decoupling-beam or the inner and outer decoupling-beams are subjected to bending.

In each transmission structure the stiffness of the inner decoupling-beam or of the decoupling-beams with respect to each other, is/are adjusted in such a way that a strain at the radial-beam, where measurement transducers, in particular strain-gages, are intended to be affixed is/are lowered. This strain is manly induced by torques being perpendicular to the longitudinal direction of the sensor device. As a result, higher torque can be measured for a defined force. This applies in particular to the facings of the radial-beam, which naturally match with the facings of the sensor device. And, of course, the stiffness may be adjusted by a thickness and a length of the respective decoupling-beam.

The six-axes sensor device (three forces and three torques) can measure high torques and low forces. The full scale in torque is therefore limited by the maximum deformation of a measurement transducer. The decoupling-beam or the corresponding decoupling-beams allow to optimise the sensitivity: increase the sensitivity in force and decrease the sensitivity in torque. This allows to find an 'optimum' area along the radial-beam where to place a measurement transducer.

A cross-sectional shape of a radial-beam of a transmission structure is regularly polygonal, in particular rectangular or quadratic. In principle, a cross-sectional shape of a radial-beam of a transmission structure can be of any shape, i. e. round, e. g. circular or elliptical cross-sectional shapes may also be applied. - A ratio of a circumferential thickness to a longitudinal width to a radial length of a radial-beam may be 1 : 1.75-3 : 2.5-4, and preferably 1 : 2-2.5 : 3.

Within a range of 300 N in force and 30 Nm in torque of the sensor device, a prismatic radial-beam may have a circumferential thickness of about 3 mm, an longitudinal width of about 6.5 mm and a radial length of about 9 mm. And a radial length of a radial-beam is defined to have enough sensitivity in force, low deformation in torque and low interaction. The finite element method makes it possible to achieve at least a good result in the design of a radial-beam and/or the sensor device.

The sensor device may comprise three, preferably four, five or six transmission structures, wherein their radial-beams are preferably arranged at the same angle to each other in the sensor device. Accordingly, the angles between the radial-beams may be approx.: 120°, 90°, 72° or 60°. A different number of transmission structures may be applicable. The radial-beams may be formed, in particular on the facings of the sensor device, in such a way that measurement transducers can be affixed thereto. When the measurement transducers are affixed to the radial-beams the sensor device becomes a force/ torque sensor means (see below).

The sensor device may essentially be plate-shaped with an essentially mirror-symmetrical or an essentially point-symmetrical base area. Furthermore the sensor device may not have a distinct cylindrical shape. The change from a cylinder concept to a plate concept fulfils the requirements of a modern robot interface. - The radial-beam can be materially bonded to or integrally connected with the inner decoupling-beam and/or the outer decoupling-beam.

In the first case, the radial-beam can be mechanically connected to the inner/outer decoupling-beam by means of a one-piece material (adhesive) connection, e. g. welding, soldering, gluing, etc. Preferably, the connection in question cannot be separated again without damaging the radial-beam and/ or the inner/outer decoupling-beam. The radial-beam can in addition be held together with the inner/outer decoupling-beam by means of a force fit and/or form fit (not in the case of an integral design).

In the second case, an integral design of the radial-beam with the inner/outer decoupling-beam means that the sensor device can only be separated by breaking the connection between the radial-beam and the inner/outer decoupling-beam. The sensor device is made from a single original piece (sheet metal, blank, etc.) and/or a single original mass (metal melt), which in turn is necessarily integral. Internal bonding results (exclusively) from adhesion and/or cohesion.

Consequently, the sensor device may have a materially connected structure (cf. above the first case) or an integral design (cf. above the second case). - In both cases, a lamination, a coating, a deposition, an electroplating etc. may also be present. - Furthermore, an inner decoupling beam and/or an outer decoupling beam is preferably characterised by the fact that it does not have a mounting device like a hole or the like.

The inventive sensor means comprises a sensor device including two coaxially arranged flanges connected to each other via four of mechanical transmission structures, wherein in each transmission structure a single deformable radial-beam firmly connects the inner flange to the outer flange, wherein preferably, only on a front facing and/or only on a rear facing of the sensor device, measurement transducers, in particular strain-gages, are affixed at the four radial-beams of the four transmission structures. As above, the radial-beams are the only mechanical connections between the inner flange and the outer flange.

Only one facing or only two facings of the sensor device need to be fitted with measurement transducers, which significantly reduces the number of e. g. 64 measurement transducers from the state of the art. The strain-gages may be piezoresistive or conventional foil strain-gages. Piezoresistive measurement transducers can be glued or hot glued. A plurality of preferably directly adjacent strain-gages can be grouped together as a so-called rosette and affixed together as a rosette. This reduces the number of elements to be affixed at the radial-beams.

A total of four or eight measuring transducers may be affixed on the two facings of each radial-beam. I. e. the sensor means has a total of 16 or 32 measurement transducers. Here, one pair or two pairs of measurement transducers may be affixed on the front facing and on the rear facing of each radial-beam. One measurement transducer may be affixed on one facing and three measurement transducers may be affixed on the other facing of each radial-beam.

Each radial-beam may carry on one facing a pair of measurement transducers, which is aligned with respect to the relevant radial direction, and on the other facing a pair of measurement transducers, which is angled with respect to the relevant radial direction. Alternatively, each radial-beam may carry on one facing one measurement transducer which is aligned and a pair of measurement transducers, which is angled with respect to the relevant radial direction, and on the other facing one measurement transducer which is aligned with respect to the relevant radial direction. Moreover, each radial-beam may carry on both facings a pair of measurement transducers, which is aligned with respect to the relevant radial direction, and a pair of measurement transducers, which is angled with respect to the relevant radial direction.

In these three cases the measurement transducers of radially opposite radial-beams may be arranged in the sensor means to be substantially 180° rotationally symmetrical with respect to a common (central) mirror axis of these radial-beams. The 180° rotational symmetry is a symmetry in three dimensions and can also be understood as a three-dimensional mirror symmetry, for example.

A measurement transducer aligned with respect to the relevant radial direction means that this measurement transducer lies on a central radial direction (preferred) of the respective radial-beam or is offset thereto. - For example within a pair of measurement transducers aligned with respect to the relevant radial direction, the measurement transducers may be arranged one behind the other preferably on the central radial direction, or both are arranged in circumferential direction side by side maybe with an offset in the radial direction. For the latter, the measurement transducers may lie equally spaced to the central radial direction or not; moreover, one measurement transducer may lie on the central radial direction.

A measurement transducer angled with respect to the relevant radial direction means that this measurement transducer lies inclined to a (central) radial direction of the respective radial-beam, wherein the measurement transducer may intersect the (central) radial direction or not (preferred). - For example within a pair of measurement transducers angled with respect to the relevant radial direction, the measurement transducers may be arranged in a v-shape, wherein this ,v' opens to the inside (preferred) or to the outside of the sensor means. Preferably such a v-configuration may be symmetrically arranged with respect to the central radial direction (preferred) or not.

Moreover, a measurement transducer angled with respect to the relevant radial direction and a measurement transducer aligned with respect to the relevant radial direction is applicable. Further, other arrangements according to the specifications here are of course applicable. In particular, it is possible in all embodiments to design the measurement transducers with the same or different lengths.

Measurement transducers which are angled with respect to the relevant radial direction may be affixed on one facing or on two facings of the relevant radial-beam and allow to sense forces along an X-axis. Further, measurement transducers which are angled with respect to the relevant radial direction may be affixed on one facing or on two facings of the relevant radial-beam and allow to sense forces along a Y-axis. Furthermore, measurement transducers which are aligned with respect to the relevant radial direction may be affixed on one facing or on two facings of the relevant radial-beam and allow to sense forces along a Z-axis.

Measurement transducers which are aligned with respect to the relevant radial direction may be affixed on one facing or on two facings of the relevant radial-beam and allow to sense torque around an X-axis. Further, measurement transducers which are aligned with respect to the relevant radial direction may be affixed on one facing or on two facings of the relevant radial-beam and allow to sense torque around a Y-axis. Furthermore, measurement transducers which are angled with respect to the relevant radial direction may be affixed on one facing or on two facings of the relevant radial-beam and allow to sense torque around a Z-axis. - It is of course to be noted that there are two coordinate systems with six axes; on the one hand three axes for the torques and on the other hand three axes for the forces.

Such embodiments enable the number of measurement transducers to be reduced and the installation of the measurement transducers to be limited to two surfaces, i. e. the front facing and the rear facing. - For sensing the loads (torque(s), force(s)) each of pair of measurement transducer may be connected in half bridge configuration, especially Wheatstone half bridge configuration.

To form a safety sensor means the measurement transducers may be redundantly arranged at the front facing and the rear facing of the sensor device. - Here, the measurement transducers may be arranged in two sensing devices of the sensor means, wherein the sensing devices can independently sense loads along axes and/or directions. Further, the measurement transducers of the first sensing device and the measurement transducers of the second sensing device may be arranged respectively at the front facing and at the rear facing of the sensor device.

Furthermore, the first sensing device is designed as a first six-axis sensing device and the second sensing device is designed as a second six-axis sensing device of the sensor-means, wherein said sensing devices are preferably arranged symmetrically in the sensor-means. Such a symmetry can be, for example, a mirror or axis symmetry, a rotational symmetry (e.g. 90° or 180°) and/or a point symmetry, etc. - The sensor means may comprise two times 16 measurement transducers, wherein 16 first measurement transducers and 16 second measurement transducers affixed on the facings of the radial-beams form two redundant six-axis sensing devices for sensing loads along three axes and/or six directions.

The use of different combinations of half bridges reduces the number of the strain-gages. A half bridge circuit, especially a Wheatstone half bridge circuit, translates the small mechanical deformations of a respective radial-beam, i. e. the small mechanical deformations of a respective measurement transducer, into a voltage signal proportional to a measured physical quantity (force, torque).

All measurement transducers of the sensor means may be the same or may comprise two, three or four different embodiments, for example different types. The measurement transducers may be designed as strain-sensitive transducers, in particular strain-gages. And the sensor device of the sensor means may be designed as an inventive force/torque sensor device.

The arrangement of the strain-gages on the radial-beams are linked with the dimensions of the cross sections of the radial-beams. It is preferable to fix the positions of the strain-gages and determine the dimensions of the cross sections of the radial-beams in relation to a maximum admissible deformation of the sensor means. The maximum admissible deformation is of course linked to the maximum loads of a robotic entity (see below) in which the sensor means is installed.

The sensor means may also include a processing circuit that receives electrical signals from each strain-gage and processes the signals to determine the magnitude and direction of the force(s) and torque(s) acting between the inner flange and the outer flange. Such a processing circuit may include, for example, a microprocessor connected to a memory in which programme code and sensor data can be stored. - The invention realises a sensor means with strain-gages on two faces only with a particular strain-gage pattern to mitigate cross load errors and to allow redundancy for a safety six-axes force/ torque sensor.

The inventive robotic entity comprises a housing in which components for the robotic entity are accommodated, wherein one of the components is an inventive force/torque sensor device, or one of the components is an inventive force/torque sensor means. Such a robotic entity may be for example a robot, a robot arm, a robot joint, an axis drive, an axis joint etc. The housing of the robotic entity may further accommodate a bearing, a gearbox, a motor preferably with a brake, a position sensor and/or a controller etc.

The invention is explained in greater detail below on the basis of exemplary embodiments with reference to the appended schematic drawing which is not to scale. Sections, elements, parts, units, components and/or patterns which have an univocal, identical or analogous configuration and/or function are identified by the same reference symbols in the description of the figures (see below), the list of reference symbols, the patent claims and in the figures (figs) of the drawing. A possible alternative which is not explained in the description of the invention (see above), which is not illustrated in the drawing and/or which is not definitive; a static and/or kinematic reversal, a combination etc. with respect to the exemplary embodiments of the invention or a component, a pattern, a unit, a part, an element or a section thereof, can further be gleaned from the list of reference symbols and/or the description of the figures.

In the invention, a feature (section, element, part, unit, component, function, variable etc.) can be of positive configuration, that is to say present, or of negative configuration, that is to say absent. In this specification (description (description of the invention and of the figures), list of reference symbols, patent claims, drawing) a negative feature is not explained explicitly as a feature if value is not placed on it being absent according to the invention. This means that the invention actually made and not constructed by through prior art consists in omitting the said feature.

A feature of this specification can be used not only in a specified manner and/or way, but rather also in another manner and/or way (isolation, combination, replacement, addition, in stand-alone configuration, omission, etc.). In particular, it is possible in the description, the list of reference symbols, the patent claims and/or the drawing, to replace, add or omit a feature in the patent claims and/or the description on the basis of a reference symbol and a feature which is assigned to it, or vice versa. In addition, a feature in a patent claim can thereby be interpreted and/or specified in more detail.

The features of the description can also be interpreted as optional features (in view of the (initially mostly unknown) prior art); that is to say, each feature can be considered to be an optional, arbitrary or preferred feature, that is to say a feature which is not mandatory. Therefore, a separation of a feature, possibly including its periphery, from an exemplary embodiment is possible, it then being possible for the said feature to be transferred to a generalised inventive concept. The absence of a feature (negative feature) in an exemplary embodiment shows that the feature may be optional (skilled person) in relation to the invention. Furthermore, in the case of a species term for a feature, a genus term for the feature can also be read (possibly further hierarchical classification into subgenus etc.), whereby a generalisation of the feature is possible, e. g. taking into account equivalent effect and/or equivalence.

In the merely exemplary figures (figs):
fig. 1 shows in a perspective front/rear view a first embodiment of a (force/torque) sensor device (absent measurement transducers) for a (force/torque) sensor means (measurement transducers present) for a robotic entity,
fig. 2 shows in a two-dimensional illustration a lateral circumferential view of an embodiment of a sensor device or a sensor means, which may be applicable to all embodiments of the sensor device or the sensor means,
figs 3 and 4 each show in a two-dimensional front/rear plan view, a second embodiment of a sensor means (fig 3) as well as a third embodiment of a sensor device (fig 4),
figs 5 and 6 show front/rear or rear/front views of a fourth embodiment of a sensor means, wherein 16 of its 32 measurement transducers are identified (Jc...: angled measurement transducer, Jf...: aligned measurement transducer), and
fig. 7 shows in an example in the form of a table, the mathematical signs of electrical measurement signals of the 16 measurement transducers from figs 5 and 6 for sensing the twelve different load cases of the sensor means.

The invention is explained in more detail below with reference to exemplary designs of four embodiments of a variant of a (force/torque) sensor device 10 for a (force/torque) sensor means 1 for a robotic entity 0, in particular a robot arm 0 or a robot joint 0. Although the invention is described and illustrated further in greater detail by way of preferred embodiments, the invention is not restricted by the disclosed embodiments, but rather is of more fundamental nature. Other variations can be derived therefrom and/or from the above, without departing from the scope of protection of the invention. For example, the invention can further be used in general in a robot, away from robotics, for an axis drive, an axis joint etc.

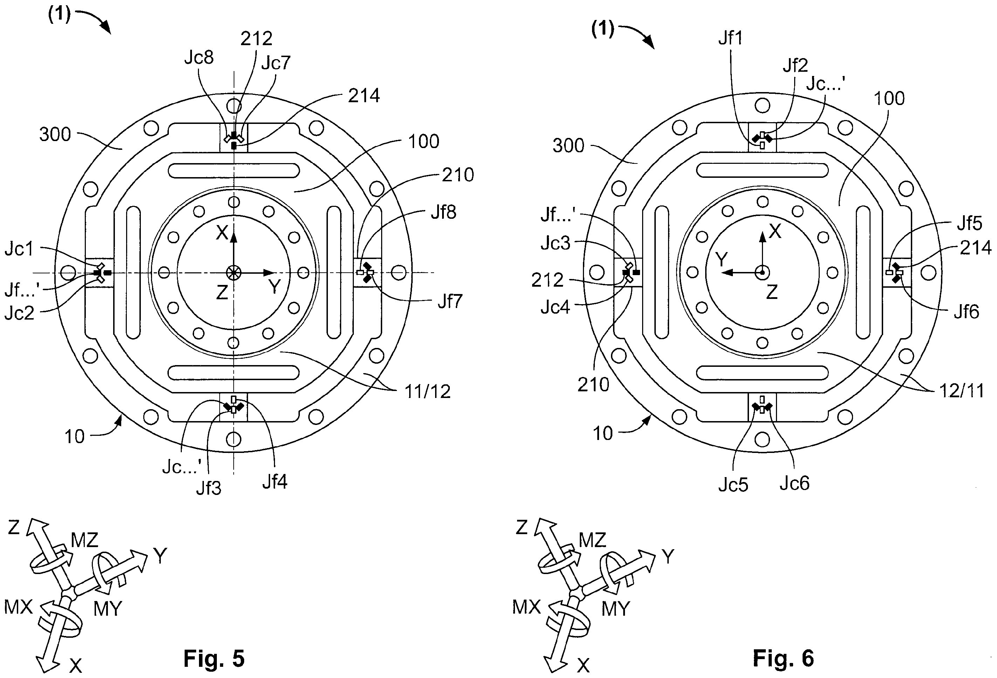

The drawing only shows those physical sections of an exemplary subject matter of the invention, which are necessary for understanding the invention. The explanation of the invention with reference to the drawing relates below to a circumferential direction Cd, a longitudinal direction Ld, and a radial direction Rd of the sensor device 10 and the sensor means 1 and their periphery. Here, the longitudinal axis standing forwards and backwards out of the drawing plane and the Z-axis of a right-hand system (see Fig. 5 to 7) coincide.

The drawing shows sensor devices 10 and sensor means 1 for six-axis load respective force/torque sensors. I. e. sensor devices 10 and sensor means 1 for sensing forces ±F in three perpendicular axes, i. e. forces F along the ±X-axis, the ±Y-axis and the ±Z-axis; and torques ±M (moments) around these three perpendicular axes, i. e. torques M around the ±X-axis, the ±Y-axis, the ±Z-axis; cf. also the shown right-hand systems in figs. 5 and 6. The force axes and torque axes are considered to be different, which is why the force/torque sensor is referred to as a six-axis force/torque sensor.

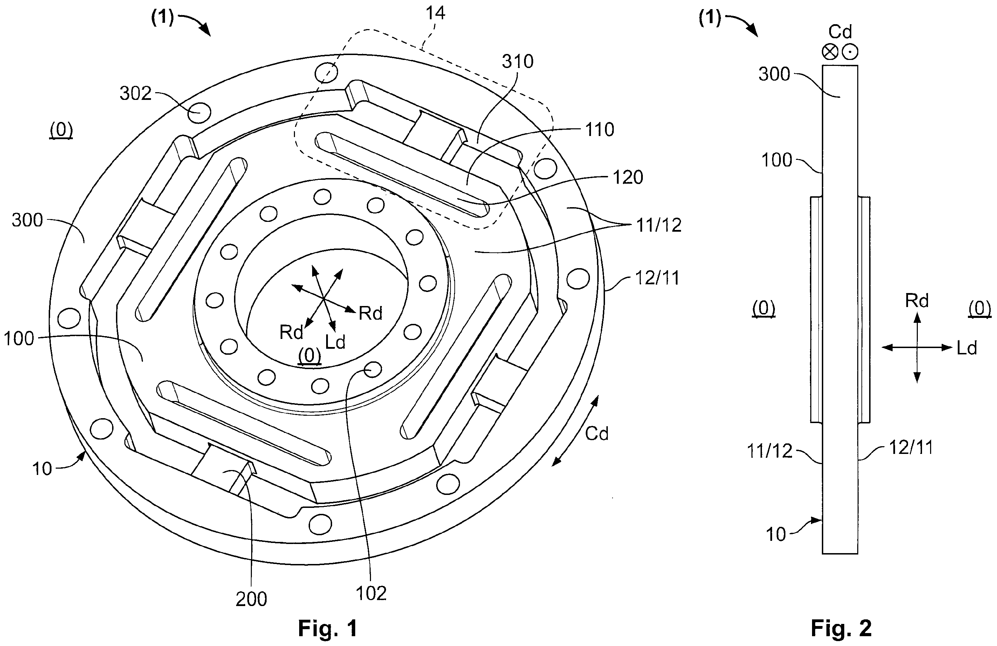

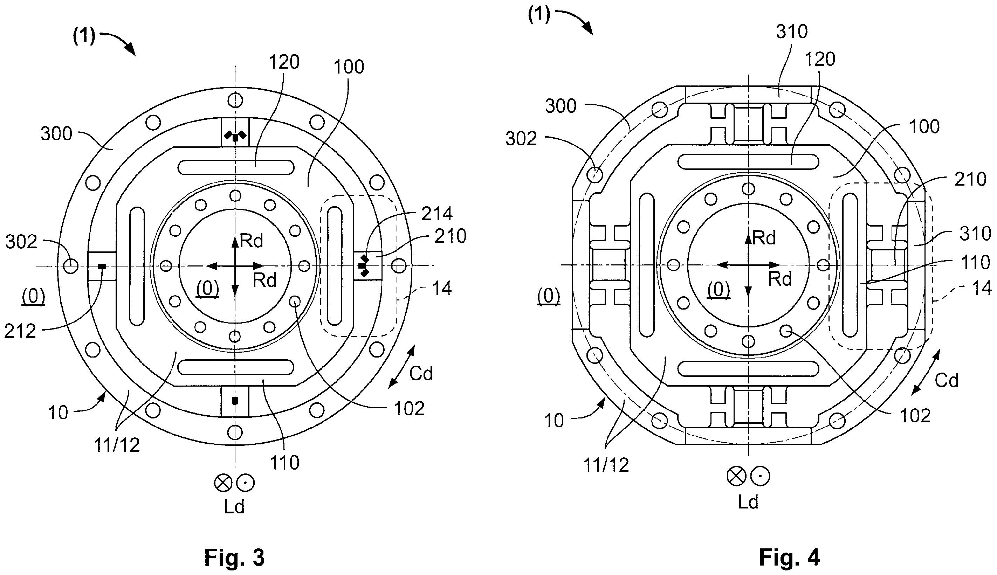

Figs 1 to 6 show four embodiments of sensor devices 10 for four embodiments of sensor means 1 of which only the second (fig. 3) and fourth (figs. 5 and 6) embodiment is shown. A sensor means 1 differs from a sensor device 10 at least by measurement transducers 212, 214 and optionally a processing circuit (cf. above). A measurement transducer 212, 214 can be a strain-sensitive transducer 212, 214 and in particular a strain-gage 212, 214. A respective measurement transducer 212, 214 may be affixed to the sensor device 10 aligned (measurement transducer 212) or angled (measurement transducer 214) with respect to a relevant radial direction Rd (see below) of the sensor device 10.

The sensor device 10 is essentially flat or plate-shaped and not essentially cylindrical and comprises an essentially hub-shaped inner flange 100 and an essentially ring-shaped outer flange 300. The inner flange 100 is set up coaxially in the outer flange 300, whereby a centre of gravity of the inner flange 100 can be offset in the longitudinal direction Ld relative to a centre of gravity of the outer flange 300 or preferably both centres of gravity coincide. The inner flange 100 and the outer flange 300 can be designed as a tool and mounting adapter plate or vice versa. - Other forms of inner flanges 100 and outer flanges 300 are of course applicable.

The inner flange 100 and the outer flange 300 may comprise mounting devices 102, 302 for fixed mechanical connections in a robotic entity 0 or another entity. The mounting devices 102, 302 may, for example, be configured as blind (not shown) or through-holes 102, 302 in the inner flange 100 and/or in the outer flange 300, wherein blind holes or through-holes may have internal threads. - Other forms of mounting devices 102, 302 are of course applicable.

The sensor device 10 has a plurality of mechanical transmission structures 14 by means of which the inner flange 100 and the outer flange 300 are firmly connected to each other. In the embodiments shown, four transmission structures 14 are used in each case, although other numbers may be applicable. A respective radial Rd inner section and a respective radial Rd outer section of a transmission structure 14 is associated with the inner flange 100 and the outer flange 300 or is an integral part of the inner flange 100 and the outer flange 300.

Furthermore, each transmission structure 14 has a mechanical deformable radial-beam 210, whereby the mechanical connection between the inner flange 100 and the outer flange 300 is established exclusively via the deformable radial-beams 210 in the sensor device 10. I. e. the inner flange 100 is connected via a plurality of, here four, radial-beams 210 to the outer flange 300 in the sensor device 10. - The following explanations refer to a single radial-beam 210 of a transmission structure 14 as well as to a single transmission structure 14; however, this should also apply to the other transmission structures 14.

In the radially Rd outer direction, the radial-beam 210 may be firmly connected to a decoupling-beam 310 in the outer flange 300, wherein this outer decoupling-beam 310 constitutes a full circumferential Cd portion of the outer flange 300. The outer decoupling-beam 310 is characterised in that its cross-sectional areas are smaller than the two cross-sectional areas of the outer flange 300 lying in circumferential direction Cd thereof. Here, the outer decoupling-beam 310 covers an angular area in the sensor device 10 and, apart from the two facings 11, 12 of the sensor device 10, may have at least one (figs 1, 5 and 6) or two (fig. 4) straight or preferably planar surfaces which extend at right angles to the radial direction Rd of the radial-beam 210. - It is important to note that outer decoupling-beam 310 is optional.

In the radially Rd inner direction, the radial-beam 210 is firmly connected to a decoupling-beam 110 in the inner flange 200, wherein this inner decoupling-beam 210 constitutes a circumferential Cd portion in the inner flange 200. The inner decoupling-beam 110 is characterised in that its cross-sectional areas are smaller than the two cross-sectional areas of the inner flange 200 lying in circumferential direction Cd thereof. Here, the inner decoupling-beam 110 covers an angular area in the sensor device 10 and, apart from the two facings 11, 12 of the sensor device 10, may have at least one (not shown) or two straight or preferably planar surfaces which extend at right angles to the radial direction Rd of the radial-beam 210.

The inner decoupling-beam 210 can be partially defined or cut free by means of an elongated (through) hole 120 in the inner flange 100. A longitudinal extension of the elongated (through) hole 120 is perpendicular to the radial direction Rd of the radial-beam 210, at least in the area of the radial-beam 210. The elongated (through) hole 120 is arranged in the inner flange 100 in such a way that the inner decoupling-beam 210 is arranged radially Rd outside the elongated (through) hole 120 in a radial Rd outer section of the inner flange 100.

Alternatively, analogous to the outer-decoupling beam 310, the inner decoupling beam 210 can form a full circumferential Cd portion of the inner flange 200. Furthermore, it is preferred that the outer decoupling-beam 310 and/or the inner decoupling-beam 210 is free of mounting devices 102, 302 (cf. fig. 1 and 4). An essential three-dimensional shape of the radial-beam 210 is in principle arbitrary, but a prism, a parallelepiped or in particular a cuboid is preferred. The number of transmission structures 14 in the sensor device 10 is greater than or equal to two, whereby in particular four transmission structures 14 are applicable.

The sensor means 1 (cf. fig. 3, 5 and 6) comprises a sensor device 10, for example one of the above described, and measurement transducers 212, 214, in particular strain-gages 212, 214, which are affixed at the radial-beams 210 of the preferably four transmission structures 14 of the sensor device 10. Moreover the sensor means 1 may comprise at least one processing circuit (not shown) which is electrically connected to the measurement transducers 212, 214. Such a processing circuit, for example a PCB, may be mounted at at least one stud besides a radial-beam 210 shown in fig. 4. The processing circuit may be connected to an electronics of the robotic entity 0. In another embodiment, the measurement transducers 212, 214 can be electrically connected to the electronics of or for the robotic entity 0.

The sensor means 1 preferably comprises measurement transducers 212, 214 on both facings 11, 12 of its sensor device 10, wherein a non-redundant sensor means 1 (first case) or a redundant sensor means 1 (second case) can be obtained. A sensor means 1 with measurement transducers 212, 214 on only one side may be applicable, wherein such a sensor means 1 has limited sensing capacities which may be enough for some applications.

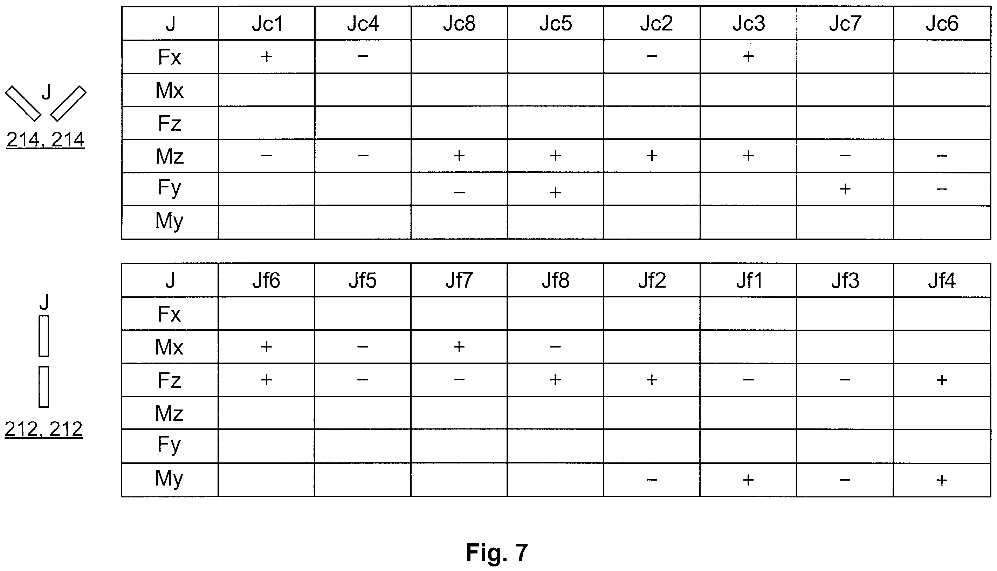

An example of the first case is shown in fig. 3. A further example is a sensor means 1 from fig. 5 and 6, wherein one of the two figs shows the arbitrary front facing 11 and the other fig. shows the arbitrary rear facing 12 of the sensor means 1. Such a sensor means 1 has either only the 16 unfilled measurement transducers 212, 214 shown (see below six-axis sensing device J (partial sensing device J of the sensor means 1), cf. fig. 7) or the 16 filled measurement transducers 212, 214 shown (see below six-axis sensing device J' (partial sensing device J' of the sensor means 1), not in fig. 7). - The table in fig. 7 in sole position represents a two-sided configuration with 16 measurement transducers 212, 214: Jc1 to Jc8, Jf1 to Jf8 for such a non-redundant concept of a sensor means 1.

And a sensor means 1 of the second case, which is suitable for a redundant six-axis load sensor, is shown in figs. 5 and 6. For such a redundant concept of a sensor means 1 32 measurement transducers 212, 214: Jc1 to Jc8, Jf1 to Jf8; Jc1' to Jc8', Jf1' to Jf8' has to be applied, wherein the measurement transducers Jc1' to Jc8' (not referenced in the drawing) are mirror symmetrically arranged to measurement transducers Jc1 to Jc8, and the measurement transducers Jf1' to Jf8' (also not referenced in the drawing) are mirror symmetrically arranged to measurement transducers Jf1 to Jf8.

The need for access to only one facing 11/12 or only two facings 11, 12 of a radial-beam 210 creates significant advantages in manufacturing the sensor device 10. In one embodiment, an entire sensor device 10 may be manufactured from a single piece of metal, e. g. aluminium. This eliminates the conventional, separate pieces of the inner flange 100 and the outer flange 300 and the mechanical interfaces for the radial-beams 210. Additionally, the integral design is more compact than prior art sensor devices operative over the same range of forces and torques. Furthermore, the integral design has very high stiffness and zero slippage, as there are no mechanical joints between the radial-beams 210 and the flanges 100, 300.

The radial-beams 210 of the sensor device 10 are equipped with the measurement transducers 212, 214 in such a way that all load cases FX, FY, FZ, MX, MY, MZ can be sensed in both directions, either singly or redundantly. Essentially two forms of measurement transducers 212, 214 are available for this purpose, which can preferably be affixed individually or preferably in pairs to the radial-beams 210. Here, at least one measurement transducer 212, especially a strain-gage 212, is aligned with respect to a relevant radial direction Rd of the respective radial-beam 210 (cf. fig. 7 top left). And at least one measurement transducer 214, especially a strain-gage 214, is angled with respect to a relevant radial direction Rd of the respective radial-beam 210 (cf. fig. 7 bottom left).

For a non-redundant sensor means 1 a total of eight measuring transducers 212, 214 may be affixed on both facings 11, 12 of two radially Rd opposite radial-beams 200, wherein preferably four measuring transducers 212 are aligned and four measuring transducers 214 are angled with respect to a relevant radial direction Rd of the respective radial-beam 210. The measuring transducers 212, 214 may be affixed as two triplets and two single pieces, or as four pairs. - Cf. fig. 3, and fig. 5 and 6 with either only the shown filled or the shown unfilled measuring transducers 212, 214.

For a redundant sensor means 1 a total of eight measuring transducers 212, 214 are affixed on the two facings 11, 12 of each radial-beam 210, wherein preferably four measuring transducers 212 are aligned and four measuring transducers 214 are angled with respect to the relevant radial direction Rd of the radial-beam 210. The measuring transducers 212, 214 may be affixed as four pairs. Cf. fig. 5 in connection with fig. 6, wherein in total 32 measuring transducers 212, 214 are affixed at the sensor device 10.

The measurement of a force and/or a torque can be based on measuring transducers 212, 214 designed as strain-gages 212, 214. The strain-gages 212, 214 may be connected to a Wheatstone bridge circuitry that becomes unbalanced when a force or a torque is applied into the sensor device 10. The Wheatstone bridge outputs a voltage caused by the resistance change of the strain-gages 212, 214, which is proportional to the applied force or torque.

Preferably the strain-gages 212, 214 are wired in 8 x ½ Wheatstone bridges, preferably in different combinations to measure force and torque to lower the number of strain-gages 212, 214. - Other forms of evaluating the electrical measurement signals of the measuring transducers 212, 214, in particular another form of a Wheatstone bridge, is of course applicable.

Fig. 5 and 6 show a single embodiment of a redundant sensor means 1 with 32 measuring transducers 212, 214 preferably designed as strain-gages 212, 214. Each radial-beam 210 carries on each of its facings 11, 12 two pairs of strain-gages 212, 212; 214, 214, wherein one pair 212, 212 is aligned with respect to the relevant radial direction Rd and one pair 214, 214 is angled with respect to the relevant radial direction Rd. The strain-gages 212, 212; 214, 214 - 212, 212; 214, 214 of diametrical radial-beams 210 in the sensor means 1 are arranged to be substantially 180° rotationally symmetrical with respect to a common (central) mirror axis of these radial-beams 210.

Within a pair of strain-gages 212, 212 aligned with respect to the relevant radial direction Rd, the strain-gages 212, 212 are preferably arranged one behind the other preferably on the central radial direction Rd. Here, one strain-gage 212 can sense at least one load F/M in a first direction ±X/±Y/±Z and the other strain-gage 212 of the pair of strain-gages 212, 212 can sense least one load F/M in a direction ∓X/∓Y/∓Z opposite to the first direction. The strain-gages 212, 212 within the pair may also be arranged side by side in circumferential direction Cd.

Within a pair of strain-gages 214, 214 angled with respect to the relevant radial direction Rd, the strain-gages 214, 214 are preferably arranged in a v-shape, wherein this ,v' opens radially Rd to the inside of the sensor means 1, wherein this v-configuration is preferably symmetrically arranged with respect to the central radial direction Rd. Here, one strain-gage 214 can sense at least one load F/M in a first direction ±X/±Y/±Z and the other strain-gage 214 of the pair of strain-gages 214, 214 can sense at least one load F/M in a direction ∓X/∓Y/∓Z opposite to the first direction. The strain-gages 214, 214 within the pair may also open radially Rd to the outside of the sensor means 1.

The sensor means 1 shown in fig. 5 and 6 is configured for a redundant six-axis load sensor comprising two six-axis sensing devices J & J'. For such a redundant concept of a sensor means 1 32 measurement transducers 212, 214: Jc1, Jc2, Jc3, Jc4, Jc5, Jc6, Jc7, Jc8; Jf1, Jf2, Jf3, Jf4, Jf5, Jf6, Jf7, Jf8 - Jc1', Jc2', Jc3', Jc4', Jc5', Jc6', Jc7', Jc8'; Jf1', Jf2', Jf3', Jf4', Jf5', Jf6', Jf7', Jf8' can be applied, wherein the measurement transducers Jc1', Jc2', Jc3', Jc4', Jc5', Jc6', Jc7', Jc8' are symmetrically arranged to the measurement transducers Jc1, Jc2, Jc3, Jc4, Jc5, Jc6, Jc7, Jc8, and the measurement transducers Jf1', Jf2', Jf3', Jf4', Jf5', Jf6', Jf7', Jf8' are symmetrically arranged to measurement transducers Jf1, Jf2, Jf3, Jf4, Jf5, Jf6, Jf7, Jf8.

Fig. 7 shows an example in the form of a table of the mathematical signs of the electrical measurement signals of 16 measurement transducers 212, 214: Jc1, Jc2, Jc3, Jc4, Jc5, Jc6, Jc7, Jc8; Jf1, Jf2, Jf3, Jf4, Jf5, Jf6, Jf7, Jf8 of the first six-axis sensing device J for detecting the twelve different load cases ±FX, ±MX; ±FY, ±MY; ±FZ, ±MZ of the sensor means 1. Only the measurement signals used for evaluation are shown in the table, while the measurement signals not used are omitted (blank spaces in the table). Furthermore, fig. 7 should be read in such a way that all mathematical signs are inverted for the respective opposite load cases +FX, +MX; +FY, ∓MY; ∓FZ, ∓MZ.

Fig. 7 and its explanations apply in a analogous way to the second six-axis sensing device J'. So to evaluate the loads of the second six-axis sensing device J', a table analogue to fig. 7 must be used, which takes into account the 16 measurement transducers 212, 214: Jc1', Jc2', Jc3', Jc4', Jc5', Jc6', Jc7', Jc8'; Jf1', Jf2', Jf3', Jf4', Jf5', Jf6', Jf7', Jf8'. - The electrical measurement signals generated under each load condition follow distinct patterns and can therefore be resolved into forces and torques using a known calibration matrix process.

For example: FX = Jc1-Jc4-Jc2+Jc3 (cf. fig. 7), wherein FX is a force along the X-axis for a first channel (first six-axis sensing device J). And MX = Jf6-Jf5+Jf7-Jf8 (cf. fig. 7), wherein MX is a torque around the X-axis for the first channel (first six-axis sensing device J). - FX'= Jc1'-Jc4'-Jc2'+Jc3', wherein FX' is the force along X-axis for a second channel (second six-axis sensing device J'). And MX' = Jf6'-Jf5'+Jf7'-Jf8', wherein MX' is the torque around X-axis for the second channel (second six-axis sensing device J'). And ideally, FX = FX' and MX = MX'. - The other two axes (Y-axis and Z-axis) are handled in the same way.

### List of reference symbols

- 0: robotic entity; for example robot, robot arm, robot joint, axis drive, axis joint etc.
- 1: (force/torque) sensor means for a robotic entity 0

- 10: (force/torque) sensor device for a sensor-means 1
- 11: (front) facing
- 12: (rear) facing
- 14: (mechanical) transmission structure

- 100: (inner) flange; for example tool adapter plate
- 102: (inner) mounting device
- 110: (inner) decoupling-beam (optional)
- 120: elongated (through) hole

- 210: (deformable) radial-beam
- 212: measurement transducer, strain-sensitive transducer, strain-gage aligned with respect to a relevant radial direction Rd
- 214: measurement transducer, strain-sensitive transducer, strain-gage angled with respect to a relevant radial direction Rd

- 300: (outer) flange, for example mounting adapter plate
- 302: (outer) mounting device
- 310: (outer) decoupling-beam

- Cd: circumferential direction of the sensor device 10, the sensor means 1
- Ld: longitudinal direction of the sensor device 10, the sensor means 1, coincides with the Z-Axis
- Rd: radial direction of the sensor device 10, the sensor means 1

- F: force
- M: torque (moment)

- J: (first) (six-axis) sensing device of the sensor-means 1, for example: Jc1, Jc2, Jc3, Jc4, Jc5, Jc6, Jc7, Jc8; Jf1, Jf2, Jf3, Jf4, Jf5, Jf6, Jf7, Jf8
- J': (second) (six-axis) sensing device of the sensor-means 1, for example: Jc1', Jc2', Jc3', Jc4', Jc5', Jc6', Jc7', Jc8'; Jf1', Jf2', Jf3', Jf4', Jf5', Jf6', Jf7', Jf8'

- X: X-Axis having a positive and a negative direction; loads: +FX/-FX, +MX/-MX (cf. fig. 7)
- Y: Y-Axis having a positive and a negative direction; loads: +FY/-FY, +MY/-MY (cf. fig. 7)
- Z: Z-Axis having a positive and a negative direction; loads: +FZ/-FZ, +MZ/-MZ (cf. fig. 7)

## Claims

1. Force/torque sensor device (10) for a force/torque sensor means (1) for a robotic entity (0), in particular a robot arm (0) or a robot joint (0), comprising
two coaxially arranged flanges (100, 200) connected to each other via a plurality of mechanical transmission structures (14) of the sensor device (10), wherein in each transmission structure (14) a single deformable radial-beam (210) firmly connects the inner flange (100) to the outer flange (300), **characterised in that**
the radial-beam (210) of each transmission structure (14) is firmly connected to a decoupling-beam (110) of the inner flange (100), wherein a radially (Rd) outer circumferential (Cd) portion of the inner flange (100) constitutes this inner decoupling-beam (110) in the inner flange (100).

2. Force/torque sensor device (10) according to the preceding claim, **characterised in that** the inner flange (100):
• is hub-shaped at least apart from its inner decoupling beams (110),
• comprises single closed cross-sections in the areas of its inner decoupling-beams (110),
• is completely closed in the circumferential direction (Cd) around its inner decoupling-beams (110),
• the inner decoupling-beams (110) are constituted by elongated holes (120) that preferably pass completely through the inner flange (100), and/or
• the elongated holes (120) are arranged in a radially (Rd) outer circumferential portion of the inner flange (100).

3. Force/torque sensor device (10) according to one of the preceding claims, **characterised in that** the radial-beam (210) of each transmission structure (14) is firmly connected to a decoupling-beam (310) of the outer flange (300), wherein an outer circumferential (Cd) portion of the sensor device (10) constitutes this outer decoupling-beam (310) in the outer flange (300).

4. Force/torque sensor device (10) according to one of the preceding claims, **characterised in that** apart from mounting devices (302), the outer flange (300):
• comprises a single closed cross-section in the area of its decoupling-beams (310),
• comprises single closed cross-sections along its entire circumference, and/or
• is completely closed in the circumferential direction (Cd) of the sensor device (10).

5. Force/torque sensor device (10) according to one of the preceding claims, **characterised in that** in each transmission structure (14):
• the outer decoupling-beam (310) has a straight or planar shape on the side on which it is connected to the radial-beam (210),
• the outer decoupling-beam (310) has a straight or planar shape on the side radially (Rd) opposite to the radial-beam (210),
• the inner decoupling-beam (110) has a straight or planar shape on the side on which it is connected to the radial-beam (210), and/or
• the inner decoupling-beam (110) has a straight or planar shape on the side radially (Rd) opposite to the radial-beam (210).

6. Force/torque sensor device (10) according to one of the preceding claims, **characterised in that** in each transmission structure (14) in relation to bending and/or torsion, the deformable radial-beam (210) is stiffer in radial direction (Rd) than its inner decoupling-beam (110) or its decoupling-beams (110, 310) in a direction perpendicular to the radial direction (Rd) of the radial-beam (210), and/or
in each transmission structure (14) the stiffness of the inner decoupling-beam (110) or of the decoupling-beams (110, 310) with respect to each other, is/are adjusted in such a way that a strain at the radial-beam (210), where measurement transducers (212, 214), in particular strain-gages (212, 214), are intended to be affixed is/are lowered.

7. Force/torque sensor device (10) according to one of the preceding claims, **characterised in that**:
• a cross-sectional shape of a radial-beam (210) of a transmission structure (14) is regularly polygonal, in particular rectangular or quadratic,
• the sensor device (10) comprises three, preferably four, five or six transmission structures (14), wherein their radial-beams (210) are preferably arranged at the same angle to each other in the sensor device (10), and/or
• the radial-beams (210) are formed, in particular on the facings (11, 12) of the sensor device (10), in such a way that measurement transducers (212, 214) can be affixed thereto.

8. Force/torque sensor means (1) for a robotic entity (0), in particular a robot arm (0) or a robot joint (0), comprising
a sensor device (10) including two coaxially arranged flanges (100, 200) connected to each other via four of mechanical transmission structures (14), wherein in each transmission structure (14) a single deformable radial-beam (210) firmly connects the inner flange (100) to the outer flange (300), **characterised in that**
only on a front facing (11) and only on a rear facing (12) of the sensor device (10), measurement transducers (212, 214), in particular strain-gages (212, 214), are affixed at the four radial-beams (210) of the four transmission structures (14).

9. Force/torque sensor means (1) according to one of the preceding claims, **characterised in that**:
• a total of four or eight measuring transducers (212, 214) are affixed on the two facings (11, 12) of each radial-beam (210), and/or
• one pair or two pairs of measurement transducers (212, 214) is/are affixed on the front facing (11) and on the rear facing (12) of each radial-beam (210), or
• one measurement transducer (212, 214) is affixed on one facing (11/12) and three measurement transducers (212, 214) are affixed on the other facing (12/11) of each radial-beam (210).

10. Force/torque sensor means (1) according to one of the preceding claims, **characterised in that** each radial-beam (210) carries:
• on one facing (11/12) a pair of measurement transducers (212, 212), which is aligned with respect to the relevant radial direction (Rd), and on the other facing (12/11) a pair of measurement transducers (214, 214), which is angled with respect to the relevant radial direction (Rd), or
• on one facing (11/12) one measurement transducer (212) which is aligned and a pair of measurement transducers (214, 214), which is angled with respect to the relevant radial direction (Rd), and on the other facing (12/11) one measurement transducer (212) which is aligned with respect to the relevant radial direction (Rd), or
• on both facings (11, 12) a pair of measurement transducers (212, 212), which is aligned with respect to the relevant radial direction (Rd), and a pair of measurement transducers (214, 214), which is angled with respect to the relevant radial direction (Rd), wherein
the measurement transducers (212, 212; 214, 214 - 212, 212; 214, 214) of radially (Rd) opposite radial-beams (210) are preferably arranged in the sensor means (1) to be substantially 180° rotationally symmetrical with respect to a common mirror axis of these radial-beams (210).

11. Force/torque sensor means (1) according to one of the preceding claims, **characterised in that**:
• measurement transducers (Jc1, Jc2, Jc3, Jc4) which are angled with respect to the relevant radial direction (Rd), are affixed on one facing (11/12) or on two facings (11, 12) of the relevant radial-beam (210) and allow to sense forces (FX) along an X-axis,
• measurement transducers (Jc5, Jc6, Jc7, Jc8) which are angled with respect to the relevant radial direction (Rd), are affixed on one facing (11/12) or on two facings (11, 12) of the relevant radial-beam (210) and allow to sense forces (FY) along a Y-axis,
• measurement transducers (Jf1, Jf2, Jf3, Jf4, Jf5, Jf6, Jf7, Jf8) which are aligned with respect to the relevant radial direction (Rd), are affixed on one facing (11/12) or on two facings (11, 12) of the relevant radial-beam (210) and allow to sense forces (FZ) along a Z-axis,
• measurement transducers (Jf5, Jf6, Jf7, Jf8) which are aligned with respect to the relevant radial direction (Rd), are affixed on one facing (11/12) or on two facings (11, 12) of the relevant radial-beam (210) and allow to sense torque (MX) around an X-axis,
• measurement transducers (Jf1, Jf2, Jf3, Jf4) which are aligned with respect to the relevant radial direction (Rd), are affixed on one facing (11/12) or on two facings (11, 12) of the relevant radial-beam (210) and allow to sense torque (MY) around a Y-axis, and/or
• measurement transducers (Jc1, Jc2, Jc3, Jc4, Jc5, Jc6, Jc7, Jc8) which are angled with respect to the relevant radial direction (Rd), are affixed on one facing (11/12) or on two facings (11, 12) of the relevant radial-beam (210) and allow to sense torque (MZ) around a Z-axis.

12. Force/torque sensor means (1) according to one of the preceding claims, **characterised in that** to form a safety sensor means (1) the measurement transducers (212, 214) are redundantly arranged at the front facing (11) and the rear facing (12) of the sensor device (10), wherein preferably:
• the measurement transducers (212, 214) are arranged in two sensing devices (J & J') of the sensor means (1), wherein the sensing devices (J & J') can independently sense loads (F, M) along axes (X, Y, Z) and/or directions (+FX, -FX; +MX, -MX; +FY, -FY; +MY, -MY; +FZ, -FZ; +MZ, -MZ),
• the measurement transducers (212, 214) of the first sensing device (J) and the measurement transducers (212, 214) of the second sensing device (J') are arranged respectively at the front facing (11) and at the rear facing (12) of the sensor device (10), and/or
• the first sensing device (J) is designed as a first six-axis sensing device (J) and the second sensing device (J') is designed as a second six-axis sensing device (J') of the sensor-means (1), wherein said sensing devices (J & J') are preferably arranged symmetrically in the sensor-means (1).

13. Force/torque sensor means (1) according to one of the preceding claims, **characterised in that** the sensor means (1) comprises two times 16 measurement transducers (212, 214), wherein
16 first measurement transducers (Jc1, Jc2, Jc3, Jc4, Jc5, Jc6, Jc7, Jc8; Jf1, Jf2, Jf3, Jf4, Jf5, Jf6, Jf7, Jf8) and 16 second measurement transducers (Jc1', Jc2', Jc3', Jc4', Jc5', Jc6', Jc7', Jc8'; Jf1', Jf2', Jf3', Jf4', Jf5', Jf6', Jf7', Jf8') affixed on the facings (11, 12) of the radial-beams (210) form two redundant six-axis sensing devices (J & J') for sensing loads (F, M) along three axes (X, Y, Z) and/or six directions (+FX, -FX; +MX, -MX; +FY,-FY; +MY, -MY; +FZ, -FZ; +MZ, -MZ).

14. Force/torque sensor means (1) according to one of the preceding claims, **characterised in that**:
• all measurement transducers (212, 214) of the sensor means (1) are the same or comprise two, three or four different embodiments,
• the measurement transducers (212, 214) are designed as strain-sensitive transducers (212, 214), in particular strain-gages (212, 214), and/or
• the sensor device (10) is designed as a force/torque sensor device (10) according to one of the preceding claims.

15. Robotic entity (0) for an industrial, a medical, a scientific, or another application, having a housing in which components for the robotic entity (0) are accommodated, **characterised in that**
one of the components is a force/torque sensor device (10) according to one of the preceding claims, or one of the components is a force/torque sensor means (1) according to one of the preceding claims.
